(19) Europäisches Patentamt
European Patent Office
Office européen des brevets

(11) **EP 4 302 724 A1**

(12) **EUROPEAN PATENT APPLICATION**

(43) Date of publication:
**10.01.2024 Bulletin 2024/02**

(21) Application number: **22182724.9**

(22) Date of filing: **04.07.2022**

(51) International Patent Classification (IPC):
**A61C 17/22** (2006.01)    **A46B 13/00** (2006.01)

(52) Cooperative Patent Classification (CPC):
**A61C 17/22; A46B 9/025; A46B 9/028;
A46B 9/045; A46B 9/06; A46B 13/02;
A61C 17/222; A61C 17/228;** A46B 2200/1066

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• **GERHARDT, Lutz Christian
Eindhoven (NL)**

• **BRANDAO SILVA, Priscilla
Eindhoven (NL)**
• **ADRIAENSEN, Guido Antonius Theodorus
Eindhoven (NL)**
• **WILLIAMS, Kayleigh Karina
Eindhoven (NL)**

(74) Representative: **Philips Intellectual Property &
Standards
High Tech Campus 52
5656 AG Eindhoven (NL)**

(54) **CLEANING SECTION FOR AN ORAL CLEANING DEVICE**

(57)    An oral cleaning system or section is provided which includes an arrangement of cleaning elements which consists of an ordered sequence of groups of cleaning elements aligned along an axis, the groups each being populated by one of a set of different types or classes of element which differ for example in their layout, form, orientation, shape, dimensions, or other spatial characteristics. Thus, this provides a brushing field which contains elements suited for multiple different types of brushing or other mechanical action in relation to oral surfaces. To optimize coverage of all teeth with all cleaning element categories, it is proposed to configure the pattern units co-operatively with the stroke length of a powered actuation system (which drives the whole pattern cyclically or periodically back and forth along a path parallel with said width).

FIG. 3

**EP 4 302 724 A1**

**Description**

**FIELD OF THE INVENTION**

The present invention relates to the field of oral cleaning devices.

**BACKGROUND OF THE INVENTION**

Within the area of personal oral cleaning, it remains a challenge to optimize the structure and configuration of oral cleaning devices so as to enable best cleaning performance for all types of teeth, and for all areas of each tooth.
Research conducted by the inventors of the present invention has found that, in any type of oral cleaning device, to achieve good overall interproximal and gum line cleaning, ideally more than one cleaning element layout is required in a single device. For instance, the optimal cleaning element length for interproximal cleaning is longer than the optimal cleaning element length for gum line cleaning, and optimal angle of extension of the cleaning elements may also be different. However, providing both these optimal cleaning element layouts in one oral cleaning arrangement has been found to give rise to new challenges and new avenues for further optimization.

**SUMMARY OF THE INVENTION**

For the purposes of the present application, a challenge identified by the inventors is that of providing a brushing section layout which includes more than one cleaning element layout in a configuration that can best ensure that every tooth will be mechanically engaged by all classes of brushing cleaning element and (ideally) all parts of every tooth can be so engaged. It has been realized by the inventors that this is a challenge because the teeth in the mouth have different sizes and thus, for a fixed pattern of oral cleaning elements, it is not obvious how to provide such a pattern which is arranged so that it can be best guaranteed that for any tooth engaged by the pattern of cleaning elements will, in the course of normal brushing operation (through manual strokes and/or automatically actuated strokes) come into contact with cleaning elements of all the plurality of types (e.g. different heights, lengths angular arrangements, diameters and so on).
The invention is defined by the claims.
According to an aspect of the invention, there is provided a cleaning section (or cleaning arrangement/system/apparatus) for an oral cleaning device, comprising:

a substrate;
an arrangement of cleaning elements carried by a surface of the substrate;
wherein the arrangement is formed of cleaning elements from a set of at least two different categories (A, B) of cleaning element, the cleaning elements of each category having a height, length and/or angular extension relative to the substrate surface different to every other category;
wherein the arrangement of cleaning elements is composed of a plurality of arrangement units arrayed sequentially in a row along a longitudinal axis (X), each unit including a plurality of groups of cleaning elements, each group comprising a plurality of cleaning elements of only one of the categories (A, B), and each unit having at least one group of each of at least two different categories of cleaning element (and preferably at least one group of each category),
preferably wherein each cleaning element group defines an elongate footprint on the substrate having an elongate length dimension which is perpendicular to said first directional axis (X), and wherein the cleaning element groups within each unit are arrayed sequentially along said longitudinal axis (X);
wherein each cleaning arrangement unit has a unit total longitudinal width (w) along the longitudinal axis (X),
an actuation mechanism for driving periodic motion of the arrangement of cleaning elements back and forth along a travel path oriented parallel to said longitudinal axis, and the travel path having a first end and a second end, a distance therebetween defining a stroke length, $\Delta x$, along the longitudinal axis;
wherein the plurality of arrangement units and the stroke length are configured such that for every arrangement unit,

$$\Delta x \geq 0.5\, \Delta W\_a$$

where $\Delta W\_a$ is a smallest longitudinal width section of a total longitudinal width of the respective unit that spans at least one group of each of at least two of the set of categories of cleaning element (and preferably at least one group of each category).

Thus, the proposed concept is to provide a pattern of cleaning elements (which upstand from a substrate, and are for engaging teeth in a brushing action during use for example) which consists of an ordered sequence of groups of cleaning elements aligned along an axis, the groups each being populated by one of a set of different types or classes of element which differ for example in their layout, form, orientation, shape, dimensions.

Thus, this provides a brushing field which contains elements suited for multiple different types of brushing or other mechanical action in relation to oral surfaces. Theoretically, one tuft category would be sufficient to clean a full tooth if the displacement of the column along the tooth arch (mesialdistal direction) is $\geq$ 1 tooth width. However, one column will not clean all critical areas, in particular both the gum line and interdental areas. Therefore, at least two different groups of specific tuft categories for gum-line and interdental cleaning are proposed.

To address the challenge discussed above concerning optimizing coverage of all teeth with all cleaning element categories, the inventors have proposed to configure the pattern unit widths co-operatively with the stroke length of a powered actuation system which drives the whole pattern cyclically or periodically back and forth along a path parallel with said widths. This co-operative optimization of these two parameters is done with the (ideal) aim that in a single actuation cycle, any tooth surface initially engaged with a part of the pattern will, over the course of that single cycle, be engaged by every one of the different categories of cleaning element.

The particular solution proposed by the inventors is to set the actuation stroke length at a fixed value which is such that, for every unit of the cleaning element arrangement/pattern, the condition holds that said stroke length is at least half of the minimum width (along the longitudinal axis) which spans one group of each category of cleaning element. This way (and as will become clearer through visual illustration), over the whole actuation cycle, for every unit of the arrangement, all of the cleaning element categories are brought into contact with a particular point of a surface initially engaged with the unit (provided that said unit is neighbored by at least one other unit adjacent to it in the direction opposite the actuation stroke direction).

Another way of saying the same thing is that, for every unit, the minimum width (along the longitudinal axis of that unit) which spans one group of each category of cleaning element should be less than or equal to double the actuation stroke length.

The details will become clearer with reference to drawings later.

It is noted that the actuation stroke length means the total distance travelled along the actuation travel path in a single direction over the actuation cycle.

In some embodiments, the set of categories contains exactly two categories, or exactly three categories, or exactly four categories.

In some embodiments, each cleaning arrangement unit has a respective total width along said longitudinal axis of at least 2.5mm and less than 15mm. This corresponds approximately to a width which is between half the width of a typical mandibular central incisor and the whole width of a maxillary first molar tooth.

In some embodiments, every arrangement unit has the same width along said longitudinal axis. In some embodiments, this width might be set at between 10-15 mm or between 11-13 mm, or approximately 12 mm. This corresponds approximately to the width of a typical largest molar tooth, which is typically the largest tooth width of a person. This width of the largest tooth is typically about 12 mm. Thus, if all cleaning arrangement units are to have the same width, it may be preferred to set this width as equal approximately to the width of the widest tooth, to guarantee that each unit will span at least the width of every tooth.

In some embodiments, the plurality of arrangement units includes units with different total widths (w) to one another.

By way of example, different widths may be achieved by providing a lesser number of groups of cleaning elements in the smaller width units, or by providing groups of a smaller width (i.e. group longitudinal widths may vary between different units of the arrangement), or by adjusting a size of any gaps or spaces included as part of the unit.

In some embodiments, the condition recited above may be replaced or refined by the alternative (narrower) condition that each of the plurality of arrangement units, and the stroke length ($\Delta$x) are configured such that:

$$\Delta \text{x} \geq 0.5 \, \Delta \text{W\_b}$$

where $\Delta$W_b is the total longitudinal width of the longitudinally widest unit of the arrangement. The parameter W_b has a single value for the whole arrangement. This contrasts with the parameter W_a recited above, which has a respective value for every unit of the arrangement. The parameter $\Delta$W_b, as defined above, will always be equal to or wider than any instance of the parameter W_a outlined above. Thus, the condition for W_b represents a subset of the scope covered by the condition related to W_a. By providing the stroke length equal to at least half the width of the widest unit of the cleaning element arrangement, this ensures that in a single stroke cycle, a surface initially engaged by any of the units will come into contact with every one of the different categories (provided that said one of the units is neighbored by at least one other unit adjacent to it in the direction opposite the actuation stroke direction).

In some embodiments, the cleaning stroke length ($\Delta$x) is less than or equal to 15 mm and greater than or equal to 1 mm. In some embodiments, the cleaning stroke length ($\Delta$x) is between 2 mm and 12 mm.

This range covers different tooth widths from smallest to largest expected, with the aim that the stroke length should (ideally) also be at least half of the width of a tooth which is being brushed or cleaned.

In some embodiments, the cleaning stroke length ($\Delta$x) is between 2 mm and 6 mm. 2 mm represents approximately half the width of a typical mandibular central incisor and 6 mm represents approximately the whole width of a maxillary first molar tooth.

In some embodiments, every unit contains a same number of groups of cleaning elements. In other embodiments, the number of groups in different units can vary.

In some embodiments, the groups comprised by every unit follow a same ordered sequence of the cleaning element categories. In other embodiments, the particular sequence of categories provided by the units can vary.

In some embodiments, the groups of every unit are arrayed contiguously along said longitudinal axis (X).

In some embodiments, the total longitudinal width (w) of each unit is defined as equal to the exact width which spans the respective sequence of groups comprised by that unit (including potentially any spaces or gaps included in-between groups of the unit).

In some embodiments, at least a subset of the units include a cleaning element free space at one longitudinal end, before or after the sequence of groups, and wherein the total longitudinal width of each unit is the width spanning all of the groups plus any cleaning element free space at said longitudinal end. The space would be at the same end of every unit that has one, for consistency. Thus, the cleaning element total width could be defined as the distance which spans from the start of the first group in the unit to the start of the first group of the next unit in the arrangement (or if there is no next group, to the end of the last group in the unit). In some embodiments, every unit includes a cleaning element free space as previously defined.

In some embodiments, every unit consists of a contiguous sequence of cleaning element groups arrayed along said longitudinal axis (X) followed by said cleaning element free space at a same (longitudinal) end of the unit.

In some embodiments, the plurality of cleaning arrangement units include respective cleaning element free spaces of different respective longitudinal widths to one another.

In some embodiments, the cleaning section further comprises a functional component for performing an oral care function mounted at a location within at least one of the cleaning element free spaces. In some embodiments, the functional component is one of: a source of light, a source of a radio frequency field, electrochemical source, an ultrasonic source, one or more nozzles for emitting a fluid, or one or more electrodes.

In a preferred embodiment, the arrangement units are arrayed contiguously with one another along said longitudinal axis (X).

In some embodiments, every unit contains exactly two groups of cleaning elements, the first group of a first category (A), and the second group of a second category (B). In some embodiments, these are in a same order for every unit, whereby the arrangement defines an alternating pattern of cleaning element categories.

In some embodiments, every unit of the arrangement contains exactly four groups of cleaning elements, following an ordered sequence along the longitudinal axis in which: a first group contains cleaning elements of a first category (A); a second group contains cleaning elements of a second category (B); a third group contains cleaning elements of the second category (B); and a fourth group contains cleaning elements of the first category (A). Thus the sequence defined by the groups of the unit is: ABBA.

In some embodiments, the arrangement of cleaning elements comprises at least 3 units, optionally at least 7, optionally at least 15, optionally at least 28, optionally at least 56. This provides a relatively large area field within which any surface engaging with the field will over an actuation cycle be engaged by all cleaning elements. 28 units would cover one unit per tooth. 56 units would cover two units per tooth: for example for cleaning both front and back.

In some embodiments, the cleaning section is for use as part of a brushing mouthpiece device.

In some embodiments, the cleaning section comprises a mouthpiece portion for the mouthpiece device for at least partial receipt in the mouth during use, and wherein the substrate is comprised by the mouthpiece portion. The body of the mouthpiece portion may define an arcuate contour shaped for approximately following a contour of at least a portion of a subject's dental arch, and wherein said longitudinal axis of the arrangement extends co-directionally with said arcuate contour. In this way, the sequence of units of the cleaning element arrangement follow along the contour of the user's teeth.

In some embodiments, the mouthpiece portion defines a tooth-receiving channel, the channel having a shape following said arcuate contour, to permit receipt of a row of teeth into the channel and wherein the arrangement of cleaning elements extends into the channel for engagement with teeth surfaces during use.

In some embodiments, the plurality of cleaning arrangement units includes units with different total widths (w) to one another. Thus, this permits the unit widths to be tailored to different tooth widths around the dental arch. In a mouthpiece device, the positions of the different units relative to different particular teeth can be known with some certainty. Thus, the unit widths can be tailored to specific tooth types expected to be positioned facing each unit in the arrangement when the mouthpiece is received within the mouth for normal use.

In some embodiments for example, the plurality of arrangement units includes units of at least seven different total widths.

This is to correspond to the minimum seven different tooth types that are present in each quadrant of the mouth, namely: Incisor (Central); Incisor (Lateral); Canine (Eye tooth / Cuspid); Bicuspid/premolar (1st); Bicuspid/premolar (2nd); Molar (1st Molar); Molar (2nd Molar).

In some embodiments, the plurality of cleaning arrangement units may include units of at least 8 different total widths. This also encompasses the wisdom tooth (3rd Molar), which may have been removed in some people.

In some embodiments, the plurality of cleaning arrangement units may include units of at least four different total widths. In particular, since incisors are generally smaller than molars, it would make sense to provide one unit to address both incisors at once (especially for example in cases where the motion stroke length is to be based on the widest molar sections). Thus, the minimum number of different unit widths might be four: incisors, canine, premolars and molars, but wherein a preferred arrangement includes at least seven different widths.

In some embodiments, the plurality of cleaning arrangement units may include units of at least fourteen different widths. This corresponds to the minimum seven different tooth types that are present in each quadrant, and covers both quadrants of a single row of teeth, where tooth widths might vary between the two quadrants.

As already discussed, each unit of the arrangement includes at least a group of cleaning elements of a first category and a group of cleaning elements of a second category.

In some embodiments, a length of the cleaning elements of the first category, in a direction along their extension from the substrate, is greater than a length of the cleaning elements of the second category, in a direction along their extension from the substrate. Said length of the cleaning elements of the first category may for example be between 6-12 mm. Said length of the cleaning elements of the second category may for example be between 4 and 8 mm. Preferably, there is a minimum difference in the length of the cleaning elements of the first category compared to the cleaning elements of the second category. Preferably, the minimum difference in length is at least 1 mm, more preferably at least 2-3 mm.

In some embodiments, the cleaning elements of the first category extend from the substrate at a first angle, and the cleaning elements of the second category extend from the substrate at a different second angle, wherein the second angle is shallower than the first angle. The second angle may for example be between 40° and 80°, more preferably approximately 45°. The first angle may for example be between 70° and 90°, more preferably approximately 90°.

In research, it has been found that this provides more optimal cleaning for interdental regions by the first group, and more optimal cleaning for the gumline by the second group.

Preferably, there is a minimum difference in the angle of extension of the cleaning elements of the first group compared to the angle of extension of the elements of the second group, for example at least 10°, more preferably at least 20°, more preferably at least 30°.

In another aspect of the invention an oral cleaning device can be provided which comprises a cleaning section in accordance with any embodiment described in this document, or in accordance with any claim of this application. The oral cleaning device may be a mouthpiece device in some examples. The oral cleaning device may be a powered toothbrush in some examples.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Figs 1-4 schematically illustrate an example cleaning section in accordance with at least one set of embodiments of the invention;

Fig. 5 schematically illustrates a further example cleaning section in accordance with at least one set of embodiments of the invention;

Fig. 6 schematically illustrates a further example cleaning section in accordance with at least one set of embodiments of the invention;

Figs. 7-10 schematically illustrate a further example cleaning section in accordance with at least one set of embodiments of the invention;

Fig. 11 schematically illustrates a further example cleaning section in accordance with at least one set of embodiments of the invention;

Fig. 12 schematically illustrates a further example cleaning section in accordance with at least one set of embodiments of the invention;

Fig. 13 schematically illustrates a further example cleaning section in accordance with at least one set of embodiments of the invention;

Fig. 14 schematically illustrates actuation of the example cleaning section of Fig. 11;

Fig. 15 schematically illustrates actuation of the example cleaning section of Fig. 13; and

Fig. 16 shows an example oral cleaning device.

## DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a cleaning system or section which includes an arrangement of cleaning elements which consists of an ordered sequence of groups of cleaning elements aligned along an axis, the groups each being populated by one of a set of different types or classes of element which differ for example in their layout, form, orientation, shape, dimensions, or other spatial characteristics. Thus, this provides a brushing field which contains elements suited for multiple different types of brushing or other mechanical action in relation to oral surfaces. To optimize coverage of all teeth with all cleaning element categories, it is proposed to configure the pattern units co-operatively with the stroke length of a powered actuation system.

An outline of main features in accordance with embodiments of the invention will now be described in summary, before being described in more detail later.

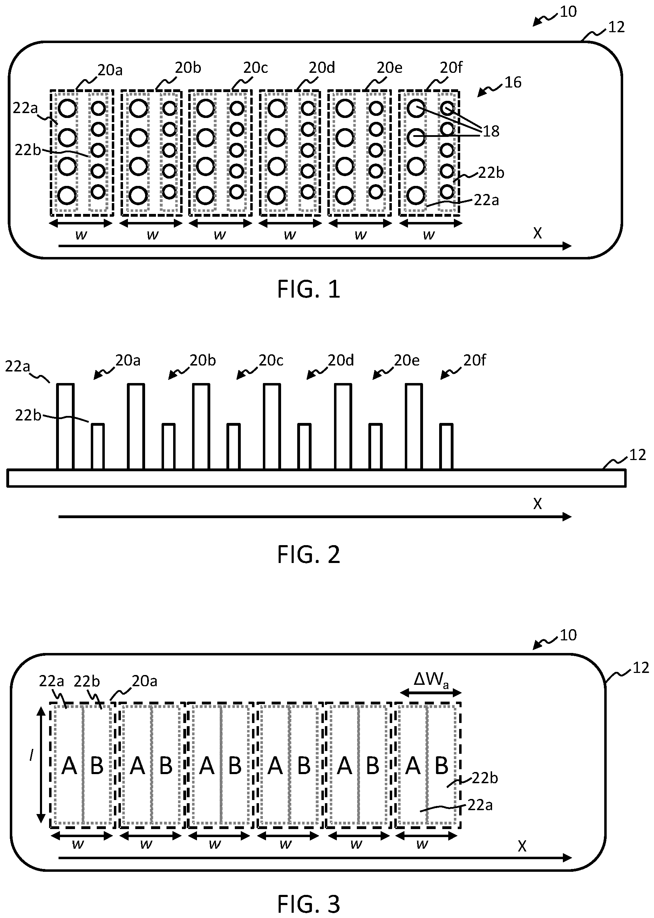

To aid illustration, this summary outline of main features of the invention will be presented with reference to Figs. 1-3, which show a configuration according to one particular set of embodiments. It will be appreciated that not all features of this specific implementation are essential to the general inventive concept, and reference to the Figures at this stage is made to aid understanding.

With reference first to Figs. 1-3, these schematically show at least a part of a cleaning section 10 for an oral cleaning device. Fig. 1 shows a highly schematic plan view of the arrangement of cleaning elements comprised by the cleaning section, illustrating the division of the arrangement into units and groups. Fig. 2 shows a schematic elevation view of the arrangement of cleaning elements. Fig. 3 shows another schematic plan view, this illustrating more clearly the sequencing of cleaning element categories followed by the cleaning element groups of this example arrangement.

The cleaning section includes a substrate 12 which carries on its surface an arrangement 16 of cleaning elements 18. The arrangement of cleaning elements may be an arrangement of tufts of cleaning elements. The substrate for example may be a portion of a cleaning unit for being received in the mouth of a subject for oral cleaning during operation. For example it could be part or all of a platen of a toothbrush, a multi-surface brush, a partial mouthpiece or a full mouthpiece. It could form a part of a mouthpiece portion of a brushing mouthpiece device. The cleaning elements upstand from the substrate surface. The cleaning elements may be bristles, or bristle-like elements. The cleaning elements may be flexible elastomeric rods in some examples. The cleaning elements may be bunched into cleaning element tufts.

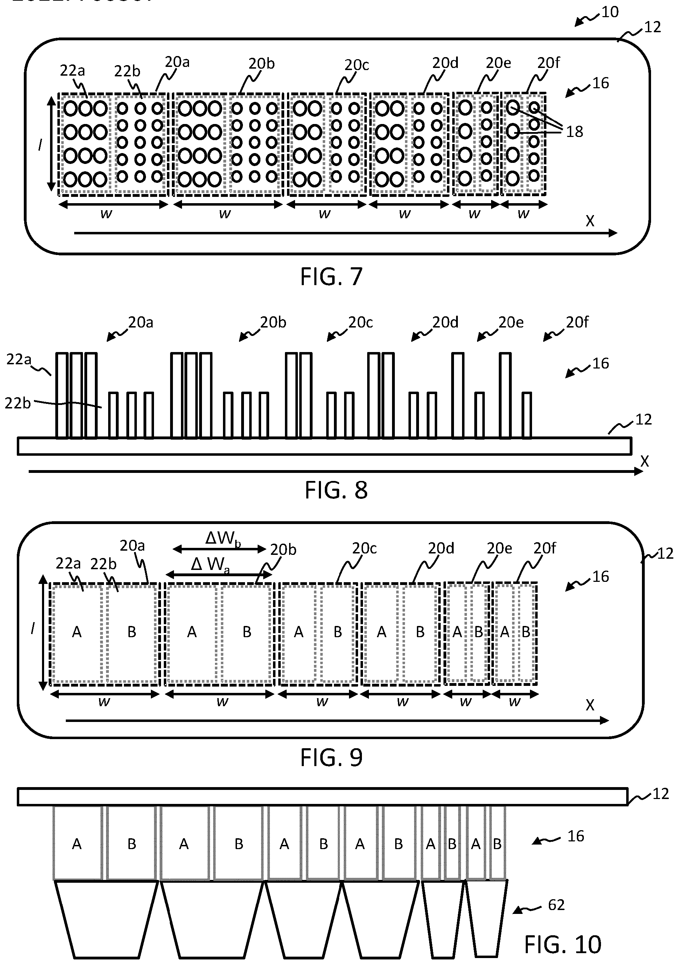

The arrangement 16 of cleaning elements 18 is formed of cleaning elements from a set of at least two different categories (labelled A and B in this illustrative example) of cleaning element, the cleaning elements of each category having a height, length and/or angular extension relative to the substrate surface different to every other category. For example, each category may define a different height, length and/or angular extension of tufts of cleaning elements relative to the surface. As will be explained further later, different heights or lengths of cleaning elements can be useful for cleaning gumline vs interdental regions. Different extension angles of cleaning elements can be useful for cleaning gumline vs interdental. In the schematic illustration of Fig. 8 for example, the cleaning elements of the two different categories A and B are shown as respectively having different heights or lengths.

The arrangement 16 of cleaning elements 18 is composed of a plurality of arrangement units 20, these being arrayed sequentially in a row along a longitudinal axis (X). Each unit 20 includes a respective plurality of groups 22 of cleaning elements, each group 22 containing a plurality of cleaning elements 18 of only one of the categories (A, B) and each unit 20 having at least one group 22 of each category of cleaning element. In the particular example illustrated in Figs. 1-3, each unit 20 contains exactly two groups 22a, 22b of cleaning elements 18, the first of a first category (A), the second of a second category (B). However, as will become clear from further examples, this is just one possible configuration.

Each cleaning element group 22 defines an elongate footprint on the substrate, by which is meant that it has an elongate length dimension (/) longer than a width dimension (w). As shown in Fig. 3, the elongate length dimension (*l*) is perpendicular to said longitudinal axis (X), and wherein the cleaning element groups 22 within each unit 20 are arrayed sequentially along said longitudinal axis (X).

Each cleaning arrangement unit 20 has a unit total longitudinal width (w) along the longitudinal axis (X).

In this illustrated example, all of the units 20 contain the same number of groups 22 of cleaning elements, and the groups 22 comprised by every unit 20 follow a same ordered sequence of the cleaning element categories. In this example, this sequence is AB. As a result, the overall cleaning element arrangement 16 defines a cyclically repeating pattern of cleaning element categories ABABAB etc., and where each unit 20 effectively is a smallest unit of this cyclically repeating pattern (i.e. AB in this case). This represents one advantageous configuration, but is not the only one, as will become clear. This type of configuration could be expanded to a cyclically repeating sequence of any number of categories, e.g. ABCABCABC, where ABC is the sequence of categories followed by each unit.

Although not fully clear from the schematic illustration, in accordance with the present example, the groups 22 comprised by every unit 20 are arrayed contiguously within that unit along said longitudinal axis (X). Also, in the illustrated example, the units 20 are arrayed contiguously with one another along said longitudinal axis (X).

In the illustrated example, the total longitudinal width (w) of each unit is equal to the exact width spanned by the respective sequence of groups 22 of the unit.

Optionally, in some embodiments, there can further be provided as part of the cleaning section, or as part of a system, an actuation mechanism for driving periodic motion of the arrangement 16 of cleaning elements. For example, the actuation mechanism could be arranged to drive motion of the substrate 12. In some examples, this may be motion of the substrate relative to another body. In other cases, it could be for example a global vibratory motion applied to the body of the substrate 12.

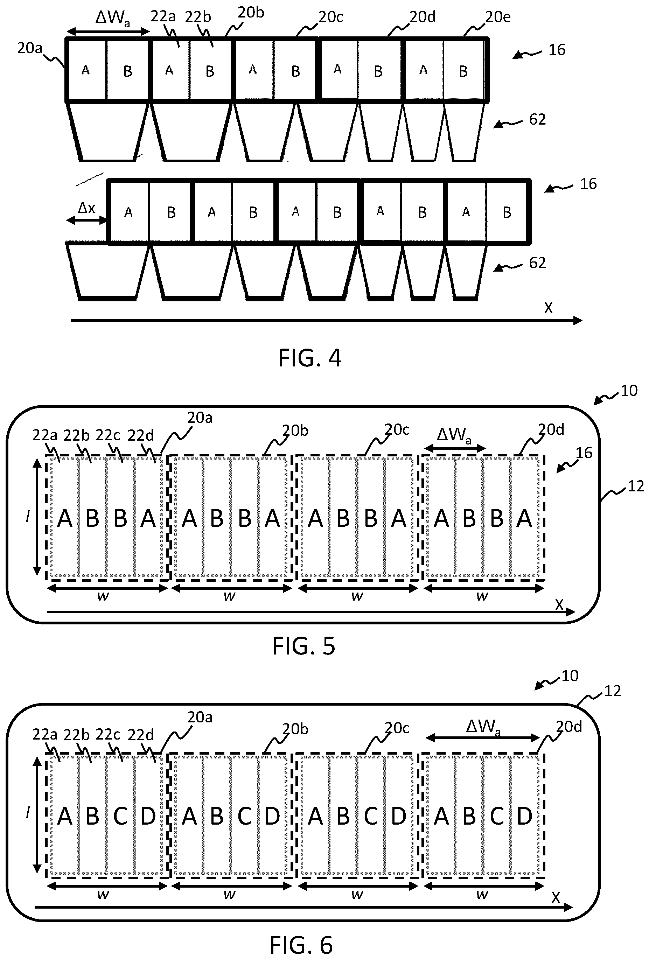

The actuation mechanism is not explicitly shown in the Figures. However, Fig. 4 illustrates an example of cyclical/periodic motion induced by an actuation mechanism along a linear travel path. The actuation is illustrated relative to a schematic illustration of a row of different teeth 62 into mechanical engagement with which the arrangement 16 of cleaning elements has been brought.

The actuation mechanism acts to move the arrangement of cleaning elements 16 back and forth along a travel path oriented parallel to said longitudinal axis X, and the travel path having a first end and a second end, a distance therebetween defining a stroke length, $\Delta x$, along the longitudinal axis. Fig. 4 (top) shows the arrangement positioned at the first end of the travel path, and Fig. 4 (bottom) shows the arrangement positioned at the second end of the travel path. Following this, the arrangement of cleaning elements is returned back to the first position.

In one preferred set of embodiments, the plurality of units 20 of the arrangement 16 of cleaning elements and the stroke length $\Delta x$ of the actuation are configured such that for every unit 20 in the arrangement, the following condition holds:

$$\Delta x \geq 0.5 \, \Delta W\_a$$

where $\Delta W\_a$ is a smallest longitudinal width section of a total longitudinal width of the respective unit 20 that spans at least one group of each of the set of categories of cleaning element.

The parameter $\Delta W\_a$ is thus one which is possessed separately by every unit 20 of the arrangement 16 and the condition should hold for every unit.

In the illustrated example of Figs. 1-4, the parameter $\Delta W\_a$ is the same for every unit 20 of the arrangement 20 because all of the units of the arrangement are identical. In the case of Figs. 1-4, parameter $\Delta W\_a$ is shown illustratively for one unit (although it is the same for all the others also) in Fig. 3 and Fig. 4. In this example, it corresponds in fact to the total longitudinal width (w) of the unit 20, since the unit only has one of each of the categories of the set of categories.

It is noted that a minimum arrangement of cleaning elements encompassed by embodiments of the invention may be an arrangement comprising: two units 20, each with (at least) two groups 20 of cleaning elements, one group of a first category (A), one group of a second category (B).

More preferably however, the arrangement of cleaning elements comprises at least 3 units, optionally at least 7, optionally at least 15, optionally at least 28, optionally at least 56. Provision of 28 units would cover one unit per tooth. 56 units would cover two units per tooth: for example for cleaning both front and back.

Fig. 5 illustrates a further example arrangement of cleaning elements in accordance with at least one set of embodiments.

In this arrangement, every unit 20 contains exactly four groups 22a, 22b, 22c, 22d of cleaning elements. The groups 22 are again arrayed contiguously within each unit 20 along the longitudinal axis X. The units 20 are also arrayed contiguously with one another along the longitudinal axis. The groups in each unit 20 follow an ordered sequence along the longitudinal axis in which: a first group contains cleaning elements of a first category (A); a second group contains cleaning elements of a second category (B); a third group contains cleaning elements of the second category (B); a fourth group contains cleaning elements of the first category (A). Thus, in this case, the overall arrangement 16 defines a cyclically repeating sequence of a total set of two cleaning element categories, and each unit 20 represents a smallest unit of that repeating sequence, namely ABBA. Thus, in this example, the set of possible categories of cleaning elements numbers only two (A and B), but there are four groups in each unit, with two groups of each category of cleaning element.

As already discussed, optionally, embodiments can include an actuation arrangement. As has also been discussed, a condition can be imposed ($\Delta x \geq 0.5 \Delta W\_a$) which holds for every unit of the arrangement. By way of reminder, $\Delta W\_a$ is a smallest longitudinal width section of a total longitudinal width of a respective unit 20 of the arrangement 16 that spans at least one group 22 of each of the set of categories of cleaning element. In the example of Fig. 5, $\Delta W\_a$ spans just half the total longitudinal width, w, of each unit (as illustrated in Fig. 5), since this is the smallest portion of the width of each unit which fully spans both an A-category group 20 and a B-category group.

However, the arrangement 16 of Fig. 5 can be provided without any actuation, and without said constraint relating to the actuation stroke length $\Delta x$.

Fig. 6 illustrates a further example arrangement of cleaning elements in accordance with at least one set of embodiments.

In this arrangement, every unit 20 contains exactly four groups 22a, 22b, 22c, 22d of cleaning elements. The groups 22 are again arrayed contiguously within each unit 20 along the longitudinal axis X. The units 20 are also arrayed contiguously with one another along the longitudinal axis. The groups in each unit 20 follow an ordered sequence along the longitudinal axis in which: a first group contains cleaning elements of a first category (A); a second group contains cleaning elements of a second category (B); a third group contains cleaning elements of a third category (C); and a fourth group contains cleaning elements of a fourth category (D). Thus, in this case, the overall arrangement 16 defines a cyclically repeating sequence of a total set of four cleaning element categories, and each unit 20 represents a smallest unit of that repeating sequence, namely A, B, C, D. Thus, in this example, the set of possible categories of cleaning elements numbers four (A, B, C, D), there are four groups in each unit, with one groups of each category of cleaning element.

As already discussed, optionally, embodiments can include an actuation arrangement. As has also been discussed, a condition can be imposed ($\Delta x \geq 0.5 \Delta W\_a$) which holds for every unit of the arrangement. For the example of Fig. 6, the parameter $\Delta W\_a$ is indicated. In this case, for each unit, it in fact spans the whole of the total longitudinal width w of the unit since this is the smallest portion of the total width of the unit that covers one group of every cleaning element category.

In each arrangement of the examples outlined so far, every unit 20 of a given arrangement has the same total longitudinal width, w. Furthermore, also in the examples outlined so far above, within each unit 20, the groups 22 of cleaning elements have the same longitudinal widths as one another. However, in relation to any of the above examples, variations of these might be provided in which, within a given arrangement, units of different widths are provided, and/or within units of a given arrangement or across different groups of a single arrangement, groups of different widths may be provided.

Figs. 7-10 schematically illustrate one example arrangement in accordance with one or more embodiments.

Here, Fig. 7 shows a highly schematic plan view of the arrangement of cleaning elements comprised by the cleaning section, illustrating the division of the arrangement into units and groups. Fig. 8 shows a schematic elevation view of the arrangement of cleaning elements. Fig. 9 shows another schematic plan view, this illustrating more clearly the sequencing of cleaning element categories followed by the cleaning element groups of this example arrangement. Fig. 10 schematically illustrates the arrangement of cleaning elements in use, being applied against a row of teeth.

In all respects, this set of embodiments is the same as the one outlined in Figs. 1-4, except for the fact that the plurality of arrangement units 20 includes units with different total widths (w) to one another.

In more detail, in this example, all of the units 20 contain the same number of groups 22 of cleaning elements, and the groups 22 comprised by every unit 20 follow a same ordered sequence of the cleaning element categories. In this example, this sequence is AB. As a result, the overall cleaning element arrangement 16 defines a cyclically repeating pattern of cleaning element categories ABABAB etc., and where each unit 20 effectively is a smallest unit of this cyclically repeating pattern (i.e. AB in this case).

Although not fully clear from the schematic illustration, in accordance with the present example, the groups 22 comprised by every unit 20 are arrayed contiguously within that unit along said longitudinal axis (X). Also, in the illustrated example, the units 20 are arrayed contiguously with one another along said longitudinal axis (X).

In the illustrated example, the total longitudinal width (w) of each unit is equal to the exact width spanned by the respective sequence of groups 22 of the unit.

However, in contrast to the set of embodiments of Figs. 1-4, among the units 20a-20f of the arrangement, there are units of different total widths w. In the present example, the different unit widths w is achieved by varying the widths along the longitudinal axis X of the groups 22 within the units. For example, the units 20c and 20d each contain one A-category group 22a and one B-category group 22b, but these groups having smaller longitudinal width than the equivalent A-category group and B-category groups in each of units 20a and 20b, and, in turn, larger widths than the equivalent A-category group and B-category groups in each of units 20e and 20f.

As schematically illustrated in Fig. 10, an advantage of optionally providing cleaning arrangement units 20 having differing widths is that these can better match the differing widths of teeth 62. For example, the widths can be configured in a sequential pattern of different widths that is known to correspond to the sequence of widths of typical teeth in a subject's mouth. This has the advantage that in use every tooth can be fully spanned by a respective unit 20 containing at least one group 22 of every category of cleaning element.

For example, if the cleaning section 10 is used as part of an oral care device which provides a reliably predictable positioning of cleaning arrangement units 20 relative to teeth, such as a brushing mouthpiece device (described later), then the unit widths w can be tailored to expected widths of particular teeth along the dental arch.

Thus, by providing the units with different widths, this allows units to match to the differing widths of teeth. As will become clear, there are different particular implementations of this, depending upon the intended use case. For example, for a brushing mouthpiece device, the positions of each unit relative to different particular teeth can be known to a high level of certainty for normal use, and thus the widths can be varied along the pattern longitudinal axis X to match onto the different typical tooth sizes. However, in other use cases, such as a power toothbrush, the provision of different widths still adds a technical effect since for example the user themselves can control the operation of brushing to match the appropriate group sizes to the tooth they are brushing, or, even absent this, the provision of different group sizes increases the probability that a given tooth of unknown size will be engaged by all categories of elements compared to a fixed unit width variant.

As noted above, embodiments can include an actuation arrangement. As has also been discussed, a condition can be imposed on the actuation stroke length $\Delta x$ ($\Delta x \geq 0.5 \Delta W\_a$) which holds for every unit of the arrangement. For the example of Figs. 7-10, the parameter $\Delta W\_a$ is indicated. In this case, for each unit, it in fact spans the whole of the total longitudinal width w of the unit since this is the smallest portion of the total width of the unit that covers one group of every cleaning element category.

Since there are units of different widths in this set of embodiments, the constraint corresponds in practice to a requirement that the stroke length $\Delta x$ should meet the constraint $\Delta x \geq 0.5 \Delta W\_a$ for the parameter $W\_a$ of the largest longitudinal width (w) unit of all the units 20 (unit 20a or unit 20b).

In some embodiments, the constraint on the actuation stroke length might be simplified. In particular, in some embodiments, instead of the previously discussed constraint, each of the plurality of arrangement units 20, and the stroke length $\Delta x$ may be configured such that,

$$\Delta x \geq 0.5 \ \Delta W\_b$$

where $\Delta W\_b$ is the total longitudinal width (w) of the longitudinally widest unit of the arrangement.

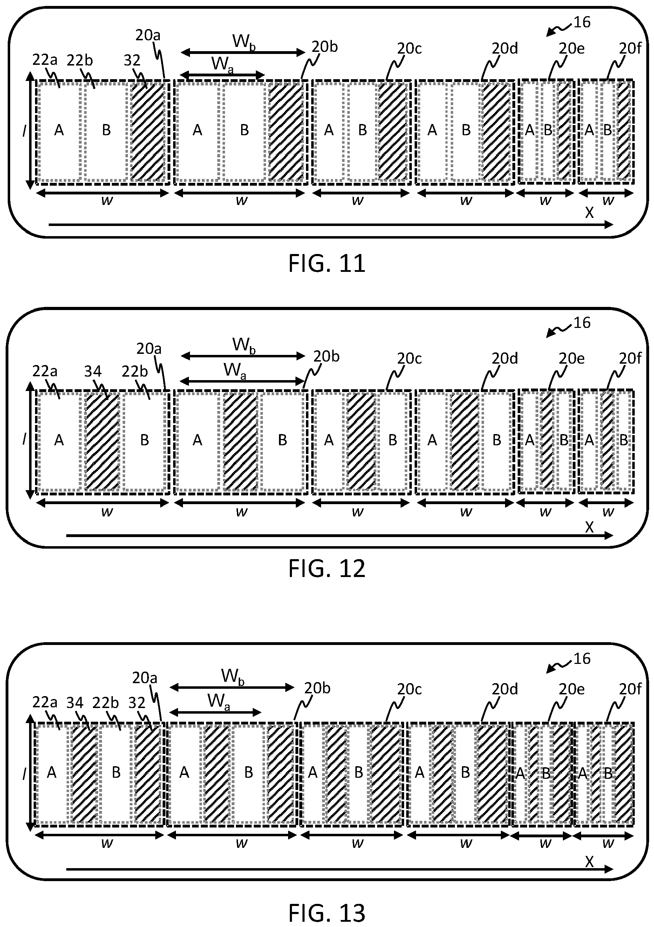

In the particular example of Figs 7-10, in fact $\Delta W\_a$ is the same as $\Delta W\_b$. However, this is not always the case. For example, for the cleaning arrangement of Fig. 5, $\Delta W\_b$ would be the total width of the largest of the units, whereas $\Delta W\_a$ is corresponds to only half the width of any one of the units. Another example arises in Fig. 11 and Fig. 13, to be described now.

With reference to Fig. 11, this shows a schematic plan view illustration of the cleaning element arrangement 16. In this example, each unit 20 of the arrangement 16 includes a cleaning element free space 32 at one longitudinal end (at one terminal end), before or after the sequence of groups. In fact, in the example of Fig. 11, every unit has the cleaning element free space at the distal end, after the sequence of groups 22 of the unit.

In this case, the total longitudinal width, w, of each unit 20 is the width spanning all of the groups 22 of the unit plus the cleaning element free space 32 at the end. The units 20 are arrayed contiguously with one another along the longitudinal axis. Thus, a corollary is that the total longitudinal width w can be defined for each unit 20 as the width along the longitudinal axis spanning from the start of the first group 22a of the unit, to the longitudinal end of the cleaning element free space at the end of the unit.

Thus, in this case, the cleaning element free space could be understood as part of a cyclically repeating pattern, A-B-SPACE-A-B-SPACE, where the arrangement units 20 represent the smallest unit of the cyclically repeating sequence (A-B-SPACE).

In the particular example of Fig. 11 (and indeed of that of Fig. 12 and Fig. 13), the arrangement includes units 20 of differing widths w along the longitudinal axis X. Furthermore, these different widths are achieved by providing the units with respective groups 22 of cleaning elements which have different widths along axis X compared to other groups. Likewise, the plurality of cleaning arrangement units 20 includes cleaning element free spaces 32 of different respective widths along the longitudinal axis X. However, it is not essential to provide units of different widths. Units 20 can be provided all of the same width w, and still comprising the cleaning element free spaces 32.

Furthermore, in the example of Fig. 11, every unit consists of a contiguous sequence of cleaning element groups 22 arrayed along said longitudinal axis (X) followed by said cleaning element free space 32. However, this too is not essential, and in some embodiments, each unit may include at least one cleaning element free space 34 in-between two groups 22 of the unit 20 (so that these two groups would not be contiguous). This thus forms an interstitial space between two groups.

An example of such an arrangement is illustrated in Fig. 12. This shows an arrangement of cleaning elements in which each unit 20 of the arrangement comprises two groups 22a, 22b of cleaning elements, one of each of a set of two categories of cleaning element (A and B), and wherein there is further included a cleaning element free space 34 separating (i.e. in-between) the two groups. Thus, each unit defines a sequential pattern A-SPACE-B. Fig. 12 represents just one example, and as a general principle, some or all of the units of the arrangement of any embodiment may include one or more cleaning element free spaces located in-between two groups of cleaning elements along the sequence extending along the longitudinal axis, so that it thereby spaces the two groups with respect to one another along the longitudinal axis. Likewise, although in Fig. 12 the different units have different widths, w, in other variations, the units may have the same widths as one another.

Fig. 13 shows a further example. In this example, each of the units 20 of the cleaning arrangement 16 include a cleaning element free space 32 at one longitudinal end, after the sequence of groups, and further including a cleaning element free space 34 in-between two of the groups of the unit. Thus, this is effectively a combination of the embodiments of Fig. 11 and Fig. 12 and the options described in relation to these can optionally be applied also to the embodiment of Fig. 13. In the illustrated example, each unit contains exactly two groups of cleaning elements, each containing cleaning elements of one of a set of two categories: A and B. Thus, each unit defines a sequence A-SPACE-B-SPACE. The units are contiguous with one another in this example along the longitudinal axis X. In this particular example, the arrangement 16 includes units of different widths w. However, this is not essential and all of the units could have the same width in other examples.

With regards to the cleaning element free spaces 32, 34, in some embodiments, the cleaning section 10 may further comprise a functional component for performing an oral care function mounted at a location within at least one of the cleaning element free spaces 32, 34, and optionally wherein the functional component is one of: a source of light, a source of a radio frequency field, an electrochemical source, an ultrasound source, one or more nozzles for emitting a fluid, or one or more electrodes. This provides a structurally convenient position in which to place the functional component.

As noted above, in some embodiments, there can be provided an actuation mechanism. As has also been discussed, a condition can be imposed on the actuation stroke length $\Delta x$ ($\Delta x \geq 0.5\ \Delta W\_a$) which holds for every unit of the arrangement. As also discussed above, additionally or alternatively, a condition can be imposed on the actuation stroke length: $\Delta x \geq 0.5\ \Delta W\_b$, where $\Delta W\_b$ is the total longitudinal width (w) of the longitudinally widest unit of the arrangement.

For the example of Figs. 11-13, the parameter $\Delta W\_a$ is indicated, and the parameter $\Delta W\_b$ is indicated. It can be seen that in the example of Fig. 12, $\Delta W\_b$ is the same as $\Delta W\_a$, but in the examples of Fig. 11 and Fig. 13, it is different.

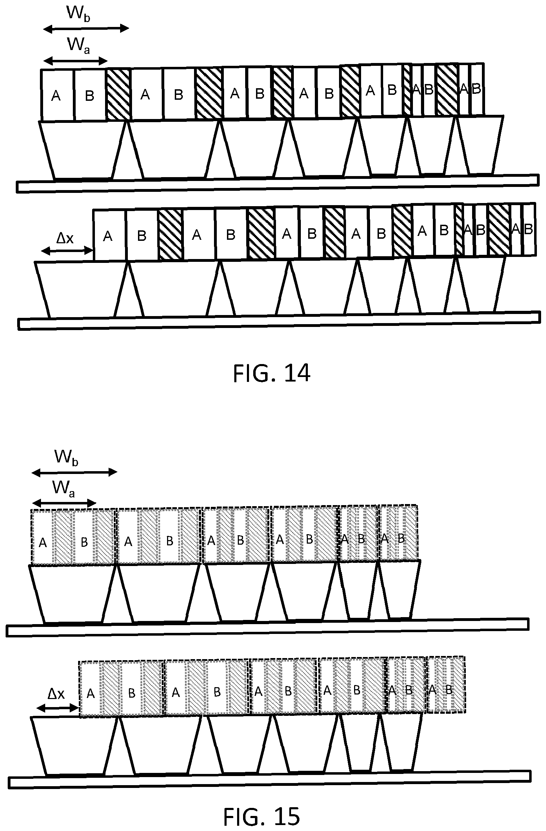

With regards to the actuation, Fig. 14 schematically illustrates the actuation action of the embodiment of Fig. 11, and Fig. 15 schematically illustrates the actuation action of the embodiment of Fig. 13. The parameters $\Delta W\_a$ and $\Delta W\_b$ are indicated. It can be seen that the cleaning element free spaces can assist in matching the single common actuation stroke length $\Delta x$ to the different tooth widths. Rather than expanding the width of the groups 22 in each unit to make the unit width wider, the spaces allow for keeping the unit widths relatively narrow. As noted, the spaces can be used to accommodate functional elements in some examples.

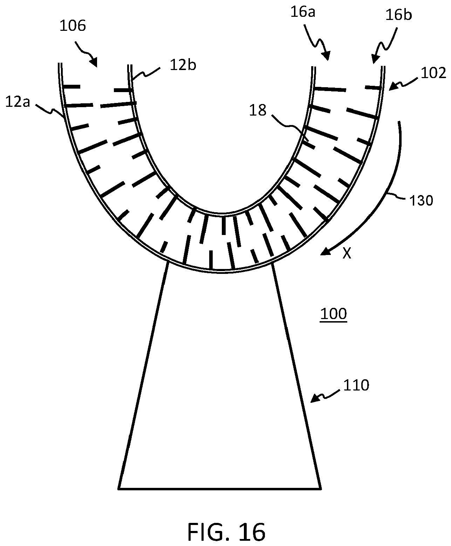

The cleaning section 10 according to any embodiment can be for use as part of a brushing mouthpiece device. By way of illustration, Fig. 16 shows an example oral care device in the form of a brushing mouthpiece device 100. The device comprises a mouthpiece portion 102 for at least partial receipt in the mouth during use. A body of the mouthpiece portion defines an arcuate contour 130 shaped for approximately following a contour of at least a portion of a user's dental arch. The mouthpiece portion defines a tooth-receiving channel 106, the channel having a shape following said arcuate contour 130, to permit receipt of a row of teeth into the channel.

In the context of such a such a device, the cleaning section could form the mouthpiece portion 102 of the device, and wherein the longitudinal axis X of the cleaning element arrangement 16 extends co-directionally with said arcuate contour 130.

For example, the arrangement of cleaning elements 16 may extend into the channel 106 for engagement with teeth surfaces during use. For example the channel may be bounded on either side by a respective substrate 12a, 12b, and wherein each of these carries a respective arrangement 16a, 16b of cleaning elements in accordance with any of the embodiments described in this document, or in accordance with any claim of the application. The mouthpiece device may further comprise a handle portion 110.

In some embodiments, the device 100 may further include an actuation mechanism for driving periodic motion of the arrangement of cleaning elements back and forth along a travel path oriented substantially parallel to the longitudinal axis X, or substantially perpendicular to the longitudinal axis X.

In the case where the actuated motion is parallel with the longitudinal axis X, the constraints mentioned above relating to $W_a$ and/or $W_b$ become relevant options to apply if desired.

The handle portion may include a drive unit for driving the actuation mechanism.

It is noted that the tufting of cleaning elements within cleaning mouthpieces is in general a challenge in terms of manufacturability. There may therefore be a preference to use fewer different tuft categories, arranged in a very efficient manner to obtain optimum coverage and maximize cleaning. Arrangements in accordance with those described in this document can assist in this aim. Moreover, efficient arrangement of cleaning elements may enable a smaller total area to be used for the tuft field, and this advantageously can generate additional free space that can be utilized to integrate additional functionality such as lighting elements, ultrasound elements, radiofrequency elements or one or more sensors.

As noted above, in some embodiments, the plurality of cleaning arrangement units includes units with different total widths (w) to one another. Thus, this permits the unit widths to be tailored to different tooth widths around the dental arch. In a mouthpiece device, the positions of the different units relative to different particular teeth can be known with some certainty. Thus, the unit widths can be tailored to specific tooth types expected to be positioned facing each unit in the arrangement when the mouthpiece is received within the mouth for normal use.

In some embodiments for example, the plurality of arrangement units includes units of at least seven different total widths. This is to correspond to the minimum seven different tooth types that are present in each quadrant of the mouth, namely: Incisor (Central); Incisor (Lateral); Canine (Eye tooth / Cuspid); Bicuspid (1st); Bicuspid (2nd); Molar (1st Molar); Molar (2nd Molar).

In some embodiments, the plurality of cleaning arrangement units may include units of at least 8 different total widths. This also encompasses the wisdom tooth (3rd Molar), which may have been removed in some people.

In some embodiments, the plurality of cleaning arrangement units may include units of at least four different total widths. In particular, since incisors are generally smaller than molars, it would make sense to provide one unit to address both incisors at once (especially for example in cases where the motion stroke length is to be based on the widest molar sections). Thus, the minimum number of different unit widths might be four: incisors, canine, premolars and molars, but wherein a preferred arrangement includes at least seven different widths.

In some embodiments, the plurality of cleaning arrangement units may include units of at least fourteen different widths. This corresponds to the minimum seven different tooth types that are present in each quadrant, and covers both quadrants of a single row of teeth, where tooth widths might vary between the two quadrants.

As has been discussed throughout, the arrangement of cleaning elements includes cleaning elements of a set of at least two different categories of cleaning element, , the cleaning elements of each category having a height, length and/or angular extension relative to the substrate surface different to every other category.

At minimum the set of categories includes at least two categories (first category and second category), and each unit of the arrangement includes a group of cleaning elements of the first category and a group of cleaning elements of the second category.

In some embodiments, a length of the cleaning elements of the first category, in a direction along their extension from the substrate, is greater than a length of the cleaning elements of the second category, along a direction of their extension from the substrate.

Said length of the cleaning elements of the first category may for example be between 6-12 mm. Said length of the cleaning elements of the second category may for example be between 4 and 8 mm. Preferably, there is a minimum difference in the length of the cleaning elements of the first category compared to the cleaning elements of the second category. Preferably, the minimum difference in length is at least 1 mm, more preferably at least 2-3 mm.

In some embodiments, the cleaning elements of the first category extend from the substrate at a first angle, and the cleaning elements of the second category extend from the substrate at a different second angle, wherein the second angle is shallower than the first angle. The second angle may for example be between 40° and 80°, more preferably approximately 45°. The first angle may for example be between 70° and 90°, more preferably approximately 90°.

Preferably, there is a minimum difference in the angle of extension of the cleaning elements of the first category compared to the angle of extension of the elements of the second category, for example at least 10°, more preferably at least 20°, more preferably at least 30°.

In research, it has been found that this provides more optimal cleaning for interdental regions by the first group, and more optimal cleaning for the gumline by the second group.

By way of example, Table 1 below outlines, by way of non-limiting example, a set of four example cleaning element categories (in this case the cleaning element being a tuft e.g. made from Nylon filaments/bristles, e.g. having a circular cross-section):

Table 1

| Category | Use | Cleaning element length (mm) | Tuft roll angle (deg) | Tuft area (mm$^2$) | Number of tufts |
|---|---|---|---|---|---|
| A | Interdental | 10 | 90 | 0.5 | 6 |

(continued)

| Category | Use | Cleaning element length (mm) | Tuft roll angle (deg) | Tuft area (mm$^2$) | Number of tufts |
|---|---|---|---|---|---|
| B | Interdental | 10 | 90 | 3 | 3 |
| c | Gum-line | 4 | 45 | 0.5 | 6 |
| D | Gum-line | 10 | 45 | 3 | 3 |

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A cleaning section (10) for an oral cleaning device, comprising:

   a substrate (12);
   an arrangement (16) of cleaning elements (18) carried by a surface of the substrate;
   wherein the arrangement is formed of cleaning elements from a set of at least two different categories (A, B) of cleaning element, the cleaning elements of each category having a height, length and/or angular extension relative to the substrate surface different to every other category;
   wherein the arrangement (16) of cleaning elements (18) is composed of a plurality of arrangement units (20) arrayed sequentially in a row along a longitudinal axis (X), each unit (20) including a plurality of groups (22) of cleaning elements, each cleaning element group (22) comprising a plurality of cleaning elements (18) of only one of the categories (A, B), and each unit (20) having at least one group of each category of cleaning element, wherein each cleaning element group (22) defines an elongate footprint on the substrate having an elongate length dimension which is perpendicular to said longitudinal axis (X), and wherein the cleaning element groups within each unit are arrayed sequentially along said longitudinal axis (X);
   wherein each cleaning arrangement unit (20) has a total longitudinal width (w) along the longitudinal axis (X), an actuation mechanism for driving periodic motion of the arrangement of cleaning elements back and forth along a travel path oriented parallel to said longitudinal axis, and the travel path having a first end and a second end, a distance therebetween defining a stroke length, $\Delta x$, along the longitudinal axis;
   wherein the plurality of arrangement units and the stroke length are configured such that for every arrangement unit,

$$\Delta x \geq 0.5\ \Delta W\_a$$

   where $\Delta W\_a$ is a smallest longitudinal width section of a total longitudinal width (w) of the respective unit that spans at least one group of each of the set of categories of cleaning element.

2. The cleaning section of claim 1, wherein the plurality of arrangement units (20) includes arrangement units with different total widths (w) to one another.

3. The cleaning section of claim 1 or 2, wherein each of the plurality of arrangement units (20), and the stroke length ($\Delta x$) are configured such that,

$$\Delta x \geq 0.5\ \Delta W\_b$$

   where $\Delta W\_b$ is the total longitudinal width of the longitudinally widest unit of the arrangement.

4. The cleaning section of any of claims 1-3, wherein the cleaning stroke length ($\Delta x$) is less than or equal to 15 mm and greater than or equal to 1 mm.

5. The cleaning section of any of claims 1-4, wherein every arrangement unit (20) contains a same number of groups (22) of cleaning elements, and
optionally wherein the groups of cleaning elements (22) comprised by every arrangement unit (20) follow a same ordered sequence of the cleaning element categories.

6. The cleaning section of any of claims 1-5, wherein the total longitudinal width (w) of each arrangement unit (20) is equal to the exact width spanned by the respective sequence of groups of the unit.

7. The cleaning section of any of claims 1-5, wherein at least a subset of the plurality of arrangement units (20) include a cleaning element free space (32) at one longitudinal end, before or after the sequence of groups, and wherein the total longitudinal width of each unit (20) is the width spanning all of the groups (22) plus the cleaning element free space (32), and optionally wherein every arrangement unit includes said cleaning element free space (32).

8. The cleaning section of claim 7, wherein every arrangement unit (20) consists of a contiguous sequence of cleaning element groups (22) arrayed along said longitudinal axis (X) followed by said cleaning element free space (32), and optionally wherein the plurality of cleaning arrangement units (20) includes cleaning element free spaces of different respective longitudinal widths (w).

9. The cleaning section of any of claims 7-8, further comprising a functional component for performing an oral care function mounted at a location within at least one of the cleaning element free spaces, and optionally wherein the functional component is one of: a source of light, a source of a radio frequency field, electrochemical source, an ultrasonic source, one or more nozzles for emitting a fluid, or one or more electrodes.

10. The cleaning section of any of claims 1-9, wherein the arrangement units (20) are arrayed contiguously with one another along said longitudinal axis (X).

11. The cleaning section of any of claims 1-10, wherein every arrangement unit (20) contains exactly two groups (22a, 22b) of cleaning elements (18), the first of a first category (A), the second of a second category (B), in a same order for every arrangement unit, whereby the arrangement defines an alternating pattern of cleaning element categories.

12. The cleaning section of any of claims 1-11, wherein the arrangement of cleaning elements comprises at least 3 units, optionally at least 7, optionally at least 15, optionally at least 28, optionally at least 56 .

13. The cleaning section of any claims 1-12, wherein the cleaning section is for use as part of or the whole of a brushing mouthpiece device,

wherein the cleaning section comprises a mouthpiece portion for the mouthpiece device for at least partial receipt in the mouth during use, and wherein the substrate is comprised by the mouthpiece portion;
wherein the body of the mouthpiece portion defines an arcuate contour shape for approximately following a contour of at least a portion of a subject's dental arch;
wherein said longitudinal axis of the arrangement extends co-directionally with said arcuate contour, and preferably wherein the mouthpiece portion defines a tooth-receiving channel, the channel having a shape following said arcuate contour, to permit receipt of a row of teeth into the channel and wherein the arrangement of cleaning elements extends into the channel for engagement with teeth surfaces during use.

14. The cleaning section of any of claims 1-13, wherein the plurality of arrangement units includes units of at least four different total widths.

15. The cleaning section of any of claims 1-14,

wherein the set of at least two categories includes at least a first category and a second category, and wherein a length of the cleaning elements of the first category along a direction of their extension from the substrate is greater than a length of the cleaning elements of the second category along a direction of their extension from the substrate, and preferably wherein said length of the cleaning elements of the first category is between 6-12 mm, and preferably wherein said length of the cleaning elements of the second category is between 4 and 8 mm, and
optionally wherein the cleaning elements of the first category extend from the substrate at a first angle, and the cleaning elements of the second category extend from the substrate at a different second angle, wherein the second angle is shallower than the first angle, and preferably wherein the second angle is between 40° and 80°, more preferably approximately 45°, and preferably wherein the first angle is between 70° and 90°, more preferably approximately 90°.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

Europäisches
Patentamt

European
Patent Office

Office européen
des brevets

# EUROPEAN SEARCH REPORT

Application Number

EP 22 18 2724

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 208 401 A2 (DENTAL RES CORP [US]) 14 January 1987 (1987-01-14) | 1,5-10, 15 | INV. A61C17/22 A46B13/00 |
| Y | * column 11, line 50 - column 12, line 14; claims; figures * | 4 | |
| Y | EP 3 785 664 A1 (BEIJING KEEYOO TECH CO LTD [CN]) 3 March 2021 (2021-03-03) | 4 | |
| A | * paragraph [0049] * | 1-3,5-15 | |
| Y | US 2003/226223 A1 (CHAN JOHN GEOFFREY [US]) 11 December 2003 (2003-12-11) * paragraphs [0145], [0146], [0189]; claims; figures * | 4 | |
| Y | US 2005/011024 A1 (PING WANG [CN] ET AL) 20 January 2005 (2005-01-20) * paragraph [0057]; figures * | 4 | |

TECHNICAL FIELDS SEARCHED (IPC)

A61C
A61D
A46B

The present search report has been drawn up for all claims

| Place of search | Date of completion of the search | Examiner |
|---|---|---|
| Munich | 21 November 2022 | Fouquet, Michèle |

EPO FORM 1503 03.82 (P04C01)

## ANNEX TO THE EUROPEAN SEARCH REPORT
## ON EUROPEAN PATENT APPLICATION NO.

EP 22 18 2724

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2022

| Patent document cited in search report | | | Publication date | Patent family member(s) | | | Publication date |
|---|---|---|---|---|---|---|---|
| EP 0208401 | A2 | | 14-01-1987 | AT | 63436 | T | 15-06-1991 |
| | | | | CA | 1266158 | A | 27-02-1990 |
| | | | | EP | 0208401 | A2 | 14-01-1987 |
| | | | | HK | 77993 | A | 13-08-1993 |
| | | | | JP | 2511226 | Y2 | 25-09-1996 |
| | | | | JP | S6249806 | A | 04-03-1987 |
| | | | | JP | H04133733 | U | 11-12-1992 |
| | | | | SG | 96091 | G | 20-03-1992 |
| EP 3785664 | A1 | | 03-03-2021 | AU | 2019258099 | A1 | 26-11-2020 |
| | | | | CN | 108903982 | A | 30-11-2018 |
| | | | | EP | 3785664 | A1 | 03-03-2021 |
| | | | | JP | 2021519662 | A | 12-08-2021 |
| | | | | TW | 201944971 | A | 01-12-2019 |
| | | | | US | 2021228324 | A1 | 29-07-2021 |
| | | | | WO | 2019205968 | A1 | 31-10-2019 |
| US 2003226223 | A1 | | 11-12-2003 | AU | 2003239242 | A1 | 22-12-2003 |
| | | | | CA | 2487886 | A1 | 18-12-2003 |
| | | | | CN | 1658807 | A | 24-08-2005 |
| | | | | EP | 1511441 | A1 | 09-03-2005 |
| | | | | JP | 2005528954 | A | 29-09-2005 |
| | | | | MX | PA04012388 | A | 25-02-2005 |
| | | | | US | 2003226223 | A1 | 11-12-2003 |
| | | | | US | 2005022323 | A1 | 03-02-2005 |
| | | | | US | 2008271271 | A1 | 06-11-2008 |
| | | | | WO | 03103531 | A1 | 18-12-2003 |
| US 2005011024 | A1 | | 20-01-2005 | CA | 2532727 | A1 | 03-02-2005 |
| | | | | EP | 1643932 | A1 | 12-04-2006 |
| | | | | JP | 4679516 | B2 | 27-04-2011 |
| | | | | JP | 2007523688 | A | 23-08-2007 |
| | | | | KR | 20060034709 | A | 24-04-2006 |
| | | | | RU | 2351295 | C2 | 10-04-2009 |
| | | | | US | 2005011024 | A1 | 20-01-2005 |
| | | | | WO | 2005009274 | A1 | 03-02-2005 |

EPO FORM P0459

For more details about this annex : see Official Journal of the European Patent Office, No. 12/82